# EUROPÄISCHE PATENTSCHRIFT

(11) **EP 2 014 844 B1**
(45) Veröffentlichungstag und Bekanntmachung des Hinweises auf die Patenterteilung: **03.04.2013**
(21) Anmeldenummer: 08018439.3
(22) Anmeldetag: 20.06.2003
(51) Int. Cl.: E04B 2/74, A47G 5/00

(54) **Sichtschutzeinrichtung**
Privacy device
Dispositif de paravent

(30) Priorität: 22.07.2002 DE 20211079 U
(43) Veröffentlichungstag der Anmeldung: 14.01.2009
(62) Teilanmeldung aus: 03013918.2
(73) Patentinhaber: Müller-Peddinghaus, Reiner, Prof. Dr., 51467 Bergisch Gladbach (DE)
(72) Erfinder: Müller-Peddinghaus, Reiner, Prof. Dr., 51467 Bergisch Gladbach (DE)
(74) Vertreter: Polypatent

(56) Entgegenhaltungen:
- US-A- 4 134 439
- US-A- 4 715 072
- US-A- 4 774 792
- US-A- 5 722 477
- US-B1- 6 206 079

## Beschreibung

Sichtschutzeinrichtungen sind als feste Stellagen in Form von sogenannten Paravents oder spanischen Wänden für die Aufteilung von Innenräumen bekannt. Hauptsächlich dienen diese Wandschirme der Unterteilung von Großraumbüros und sind als schwere, auch schallschluckende Konstruktionen bekannt. Für den Außenbereich sind Sicht- oder Windschutzelemente als leichte Tuchkonstruktionen bekannt, wobei das Tuch zwischen mittels Schnüren und Erdankern abgespannten Zeltstangen aufgespannt wird. Solche leichten Sichtschutzeinrichtungen sind nur für den temporären Einsatz vorgesehen. Diese eignen sich nicht zur Installation auf Terrassen und Balkonen.

Aus der US-A-5,722,477 ist eine Sichtschutzeinrichtung nach dem Oberbegriff des Anspruchs 1 bekannt. Diese umfasst bespannte, schwenkbeweglich miteinander verbundene Flügel, deren Rahmen jeweils über schäkelartig ausgebildete Verbindungselemente zusammengefügt sind. Die Flügel sind untereinander mit Verbindungsklammern gehalten. Diese Verbindungsklammern sind jeweils mit Schnappaufnahmen versehen, wobei die Schnappaufnahmen so ausgebildet sind, dass eine verwindungssteife Verbindung der Flügel der Sichtschutzeinrichtung untereinander zumindest nicht derart möglich ist, dass die Sichtschutzeinrichtung dauerhaft im Freien aufgestellt werden kann. Die zuvor beschriebene Sichtschutzeinrichtung ist daher entweder als Spielzeug oder als Raumteiler für Innenräume geeignet.

Der Erfindung liegt daher die Aufgabe zugrunde, eine Sichtschutzeinrichtung zu schaffen, die verhältnismäßig leicht und einfach konstruiert ist, sich jedoch für die dauerhafte Montage auf Terrassen und Balkonen eignet.

Die Aufgabe wird gelöst mit den Merkmalen des Anspruchs 1.

An wenigstens einem Flügel sind Klammern in Form von Wandklipps zur Wandbefestigung vorgesehen, die jeweils einen Sockel und eine etwa C-förmig ausgebildete, den Rahmenschenkel umschließende Aufnahme aufweisen. Über die Wandbefestigung lassen sich mehrere zueinander abwinkelbare Flügel verhältnismäßig einfach an einer Hauswand oder einer Terrassenbegrenzungswand montieren, und zwar so, dass die gesamte Anordnung an den dauerhaft an der Wand montierten Klammern verrastbar bzw. verklipsbar ist.

Auf die gleiche Art und Weise lassen sich an den Rahmenschenkeln diverse Anbauteile befestigen, beispielsweise Fußelemente oder Erdspieße.

Die erfindungsgemäße Sichtschutzeinrichtung kann zudem weitere schwenkbeweglich miteinander verbundene Flügel als jeweils mit Sichtschutzbespannung versehene Rahmen aufweisen, von denen zwei sich etwa parallel zueinander erstreckende Rahmenschenkel benachbarter Flügel über jeweils mit dem betreffenden Rahmenschenkel ein Scharnier bildende Klammern in Form von Verbindungsklipps miteinander verbunden sind, wobei die Klammern jeweils mit wenigstens einem Rahmenschenkel in wenigstens einer Winkelstellung eine formschlüssige Arretierung bilden.

Auf diese Art und Weise lässt sich eine leichte und zusammenfaltbare, verhältnismäßig stabile Anordnung von verschiedenen Sicht- und/oder Windschutzelementen zu einer Sichtschutzeinrichtung bewerkstelligen.

Die jeweils mit den Rahmenschenkeln der Flügel ein Scharnier bildenden Klammern ermöglichen das einfache Zusammenstecken verschiedener Rahmenflügel. Insbesondere dadurch, dass die Klammern zumindest teilweise formschlüssig mit den Rahmenschenkeln der Flügel zusammenwirken, lässt sich eine einfache Ausrichtung der Flügel einer Sichtschutzeinrichtung zueinander erzielen.

Vorzugsweise bilden die Klammern jeweils zwei etwa C-förmig ausgebildete Aufnahmen für die Rahmenschenkel aus, die in montierter Lage diese umgreifen.

Dadurch, dass die Aufnahmen jeweils durch federelastisch ausgebildete Haltearme gebildet werden, lassen sich in einfacher Art und Weise mehrere Flügel der erfindungsgemäßen Sichtschutzeinrichtung zusammenklipsen.

Zweckmäßigerweise sind die Klammern einstückig aus Kunststoff ausgebildet.

Die Klammern können wenigstens im Bereich einer Aufnahme wenigstens eine Rastvertiefung aufweisen, die mit Rastvorsprüngen der Rahmenschenkel zusammenwirken, so dass die einzelnen Flügel der Sichtschutzeinrichtung in wenigstens einer vorgegebenen Winkelstellung zueinander festlegbar sind. Zusätzlich oder alternativ können die Klammern so ausgebildet sein, dass wenigstens eine Aufnahme mit Schwenkbegrenzungsanschlägen versehen ist, die mit den Rastvorsprüngen der Rahmenschenkel zusammenwirken.

Bei einer besonders bevorzugten Ausführungsform der erfindungsgemäßen Sichtschutzeinrichtung ist vorgesehen, dass an wenigstens einem Rahmenschenkel wenigstens eines Flügels jeweils zwei Rastvorsprünge auf gleicher Höhe jeweils diametral gegenüberliegend angeordnet sind. Auf diese Art und Weise lassen sich zumindest einige der Klammern in zwei um 90° zueinander versetzten Winkelstellungen bezüglich der Rahmenschenkel arretieren. Hierdurch ist es möglich, mehrere Flügel der Einrichtung nach Art einer Ziehharmonika mit zueinander fluchtenden Konturen zusammenzufalten sowie diese in einer Linie fluchtend zueinander angeordnet auszuziehen.

Die Rahmen der Flügel sind zweckmäßigerweise aus mehreren die Rahmenschenkel bildenden Rohren oder Stangen zusammengesteckt, vorzugsweise sind hierzu die einzelnen Element jeweils mit endseitig aufgeweiteten Muffenenden und jeweils mit endseitig verjüngten Steckenden versehen. Anstelle von Sicherungssplinten können die Rohrenden auch mittels Federknöpfen ineinander gesichert sein. Vorzugsweise sind die Rohrenden miteinander verschraubt, wobei die Schraubenköpfe und/oder Muttern jeweils als Rastelemente dienen können.

Die Rahmen können beispielsweise Eckelemente aufweisen, über welche die Rahmenschenkel zusammengefügt sind. Diese Eckelemente können beispielsweise als spritzgegossene Kunststoffbauteile ausgeführt sein.

Die Erfindung wird nachstehend anhand eines in den Zeichnungen dargestellten Ausführungsbeispiels erläutert.

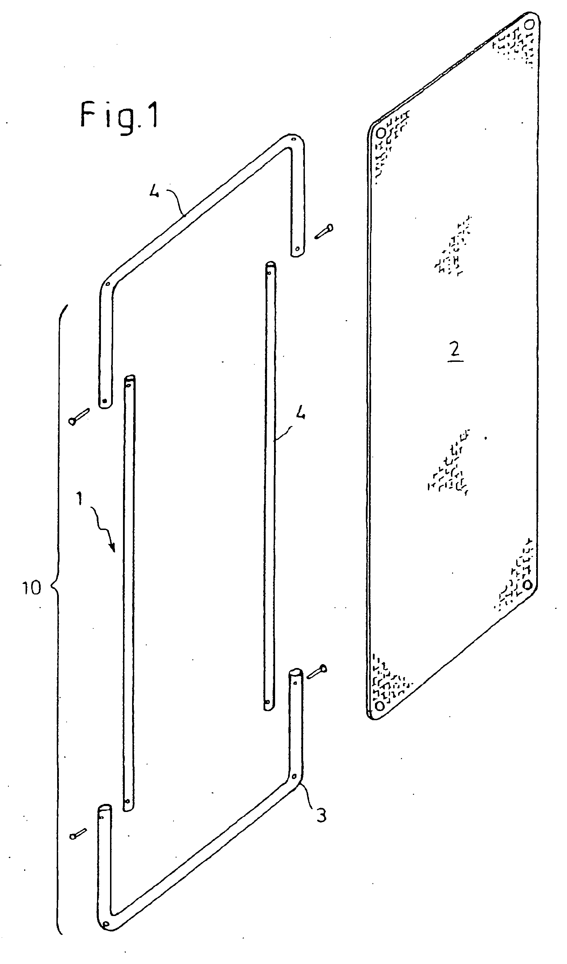

Es zeigen
- Figur 1: eine perspektivische Ansicht eines Flügels der Sichtschutzeinrichtung gemäß der Erfindung,
- Figur 2: eine Ansicht eines solchen Flügels, der mit Fußelementen versehen ist,
- Figur 3: eine vergrößerte Ansicht des in Figur 2 mit III gekennzeichneten Bereichs,
- Figur 4: eine Ansicht eines Fußelements,
- Figur 5: eine Draufsicht auf den in Figur 2 dargestellten Flügel,
- Figur 5a: eine Ansicht des als Klippfuß ausgebildeten Fußelements,
- Figur 5b: einen Schnitt durch das Standrohr des Klippfußes entlang der Linien B-B,
- Figur 5c: einen Schnitt durch das Standrohr des Klippfußes entlang der Linien C-C,
- Figur 6: eine Ansicht eines Erdspießes mit Aufnahme für den Rahmenschenkel eines Flügels,
- Figur 7: eine Ansicht, die die Verbindung mehrerer Flügel mittels als Verbindungsklipps ausgebildeten Haltern veranschaulicht,
- Figur 8: eine Draufsicht auf die in Figur 7 dargestellte Anordnung,

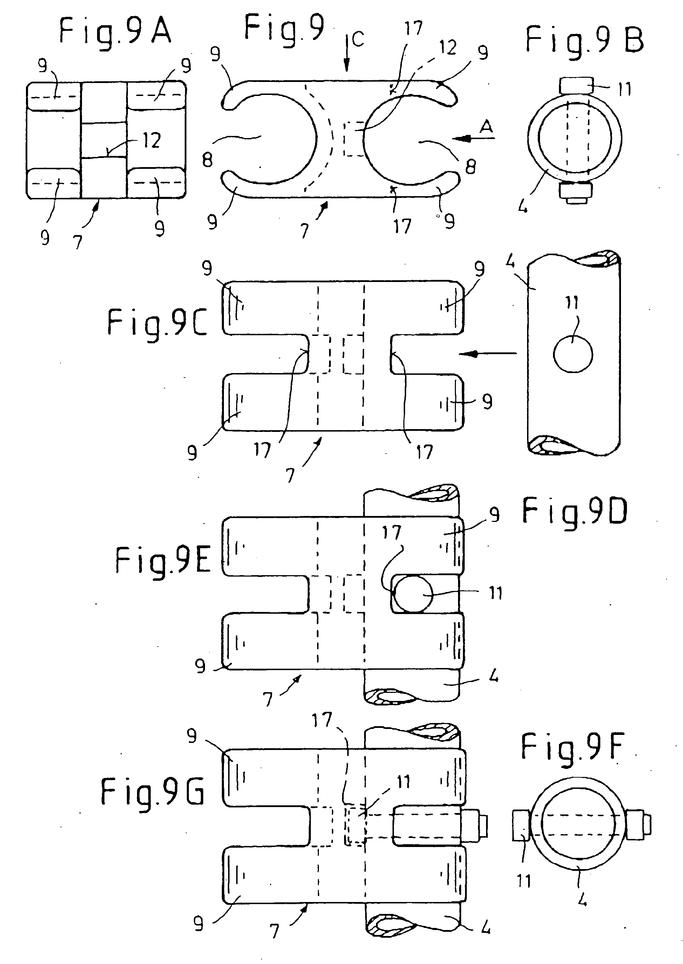

- Figur 9: eine schematische Darstellung eines Verbindungsklipps und dessen Verbindung mit dem Rahmenschenkel eines Flügels,
- Figur 9a: eine Ansicht des Verbindungsklipps in Richtung des in Figur 9 dargestellten Pfeils A
- Figur 9b: einen Schnitt durch das Rahmenrohr im Bereich der Rastvorsprünge, wobei die Lage des Rahmenrohrs in Bezug auf den in Figur 9c dargestellten Verbindungsklipp dargestellt ist,
- Figuren 9c-9f: schematische Darstellungen, die das Zusammenwirken von Verbindungsklipp und Rahmenschekel verdeutlichen,
- Figuren 10-11: eine Darstellung der Sichtschutzeinrichtung gemäß der Erfindung zur Wandmontage in ausgezogener und eingeklappter Stellung und
- Figur 12: eine Ansicht eines Flügels der Sichtschutzeinrichtung gemäß der Erfindung mit einem daran befestigten Sonnenschirm.

Wie ohne weiteres aus den Figuren ersichtlich ist, besteht die Sichtschutzeinrichtung im Wesentlichen aus mehreren schwenkbeweglich miteinander verbundenen Flügeln 1, die jeweils als mit einer Sichtschutzbespannung 2 versehene Rahmen 3 ausgebildet sind. Die Rahmen sind jeweils aus einzelnen, die Rahmenschenkel 10 bildenden Rohrabschnitten 4 zusammengesetzt. Die Rohrabschnitte 4 können unterschiedliche Durchmesser aufweisen, so dass deren Zusammensteckbarkeit gewährleistet ist, so wie dies in den Figuren dargestellt ist. Alternativ hierzu können die Enden wenigstens einiger Rohrabschnitte 4 jeweils endseitig muffenartig aufgeweitet sein, so dass die Rohrenden jeweils Aufnahmeenden und Steckenden bilden.

Die zu einem Rahmen 3 zusammengefügten Rohrabschnitte 4 sind jeweils im Bereich ihrer gegenseitigen Durchdringung mit Schrauben 5 verbunden. Die Ecken 6 des Rahmens 3 sind ebenfalls mit Befestigungsmitteln 6 zum Halten und Spannen der Sichtschutzbespannung 2 versehen. Die Befestigungsmittel 6 sind nur andeutungsweise dargestellt. Diese können in verschiedenster Art und Weise ausgeführt sein, beispielsweise als Schrauben, Bolzen, Spanndrähte oder dergleichen.

Wie vorstehend bereits erwähnt, können die Ecken des Rahmens auch als einstückig durch Spritzgießen hergestellte Eckelemente ausgebildet sein, die jeweils mit Aufnahmen für die Rohrabschnitte 4 versehen sind.

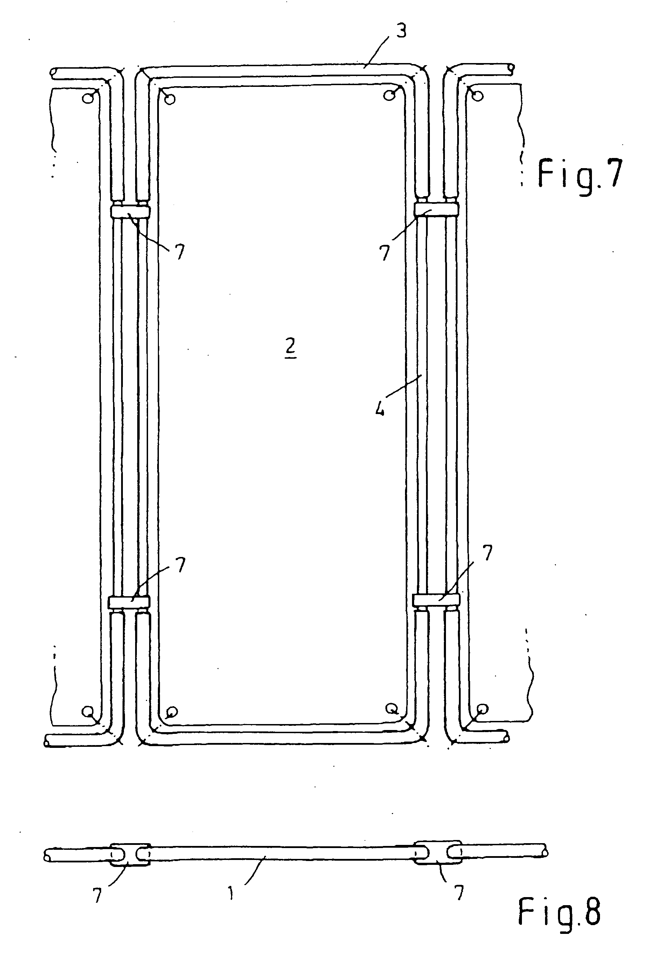

Wie insbesondere Figur 7 zu entnehmen ist, sind mehrere Flügel 1 der Sichtschutzeinrichtung untereinander mittels Scharniere bildenden als Verbindungsklipps 7 als Klammern schwenkbeweglich zueinander befestigt. Die Verbindungsklipps 7 sind aus Kunststoff ausgebildet und weisen zwei diametral gegenüberliegend angeordnete, etwa C-förmig ausgebildete Schnappaufnahmen 8 auf. Die Schnappaufnahmen 8 werden jeweils durch vier federelastisch ausgebildete Haltearme 9 der Verbindungsklipps 7 gebildet. Die Federelastizität derselben ergibt sich aus den Eigenschaften und der Dickenverteilung des thermoplastischen Materials.

Wie Figur 7 zu entnehmen ist, ist der mittlere der drei dort dargestellten Flügel 1 der Sichtschutzeinrichtung jeweils beidseitig mit Verbindungsklipps 7 an einem benachbarten Flügel 1 befestigt. Die Verbindungsklipps 7 erlauben es, die Rahmenschenkel 10 benachbarter Rahmen 3 einfach miteinander zu verklipsen, wobei gleichzeitig die schwenkbewegliche Artikulation derselben gewährleistet ist. Dabei bildet jeweils ein Rahmenschenkel 10 eines Flügels 1 die Schwenkachse, um welche die Schwenkbewegung des benachbarten Flügels 1 vollzogen wird.

Damit die Schwenkachse jeweils eindeutig festliegt, ist jeweils ein Rahmenschenkel 10 in dem Verbindungsklipp 7 drehfest arretiert, und zwar durch Rastvorsprünge 11, die in entsprechende Rastvertiefungen 12 der Haltearme 9 eingreifen. Die Rastvorsprünge 11 können im einfachsten Fall durch die Köpfe von Zylinderschrauben gebildet werden, die durch den jeweiligen Rohrabschnitt 4 geführt sind.

Zwischen den Haltearmen 9 der Verbindungsklipps 7 sind jeweils Schwenkbegrenzungsanschläge 17 vorgesehen, die mit den jeweils in gleicher Höhe der Rahmenschenkel 10 diametral gegenüberliegend angeordneten Rastvorsprüngen 11 im Sinne einer Arretierung von Verbindungsklipp 7 und Rahmenschenkel 10 zueinander zusammenwirken. Hierzu wird der betreffende Verbindungsklipp 7 so auf den Rahmenschenkel 10 aufgeschnappt, dass die Köpfe der die Rohrabschnitte 4 verbindenden Zylinderschraube sich zwischen zwei übereinanderliegend angeordneten Haltearmen 9 einfügen und dort gegen die Schwenkbegrenzungsanschläge 17 anliegen. Hierdurch wird nicht nur eine radiale Festlegung von Verbindungsklipp 7 und Rahmenschenkel 10 zueinander bewirkt, sondern auch eine axiale Sicherung derselben.

Die Verbindungsklipps 7 sind jeweils im Bereich einer Schnappaufnahme 8, jedenfalls bei dem dargestellten Ausführungsbeispiel, mit einer Rastvertiefung 12 versehen, die jeweils im Tiefsten der C-förmig ausgebildeten Schnappaufnahme 8 angeordnet ist. Die Rastvertiefung 12 ist um 90° versetzt zu den gegenüberliegend angeordneten Schwenkbegrenzungsanschlägen 17 positioniert, so dass die Verbindungsklipps 7 in zwei um 90° Winkelabstand zueinander versetzt angeordneten Positionen festlegbar sind. Hierzu ist jeweils das Abnehmen des betreffenden Verbindungsklipps 7 von dem Rahmenschenkel 10 erforderlich.

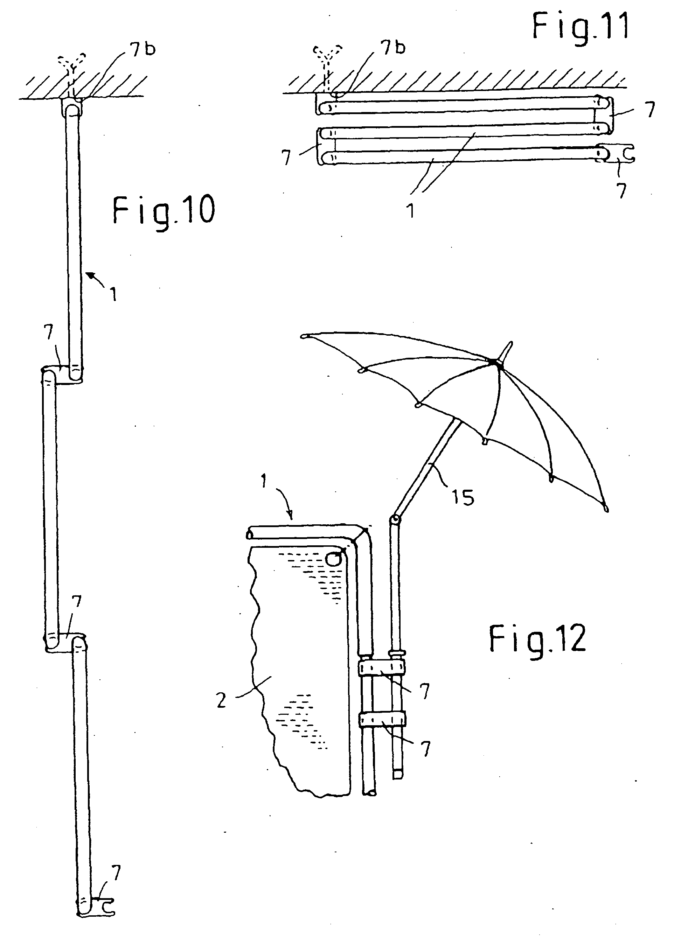

Die Rastvorsprünge 11 sind selbstverständlich in der dargestellten Konstellation auf einer Höhe des betreffenden Rahmenschenkels 11 angeordnet. Dies kann beispielsweise im Bereich einer ohnehin erforderlichen Verschraubung der Rohrabschnitte 4 miteinander sein. Hierdurch ist einerseits die Anordnung der Flügel 1 der Sichtschutzanordnung in einer Linie fluchtend zueinander möglich, andererseits kann ein Einfalten dieser in die in Figur 11 gezeigte Lage bewerkstelligt werden, derart, dass Flügel 1 mit ihrer Außenkontur deckungsgleich bzw. fluchtend aufeinanderliegen. Hierzu ist es erforderlich, die Verbindungsklipps 7 jeweils in einer um 90° versetzten Winkelstellung zu arretieren, wie dies in Figur 10 an dem von einer andeutungsweise dargestellten Wand 13 abliegenden Ende der Sichtschutzeinrichtung dargestellt ist.

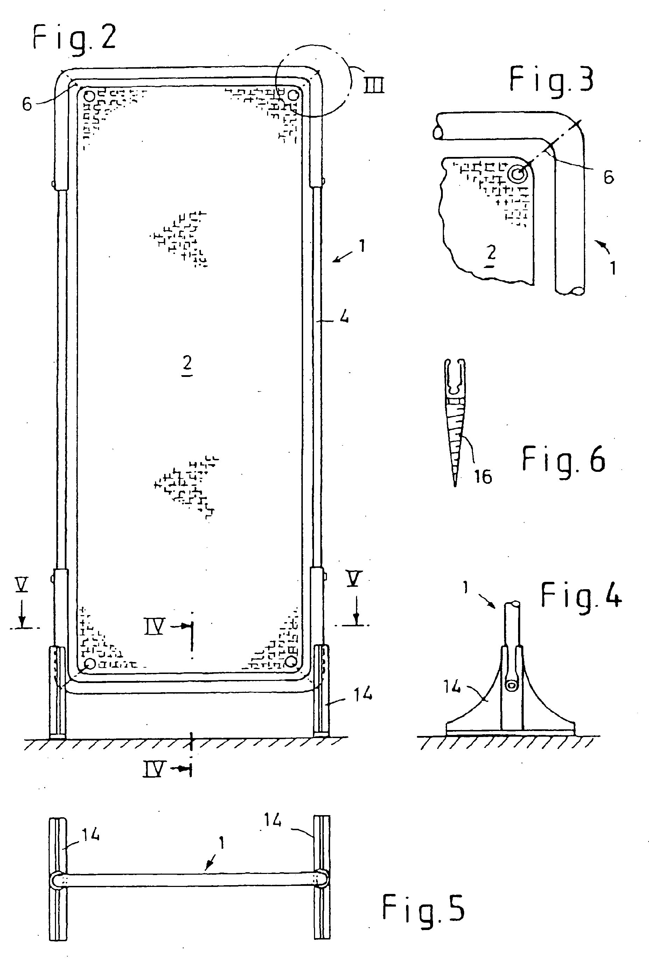

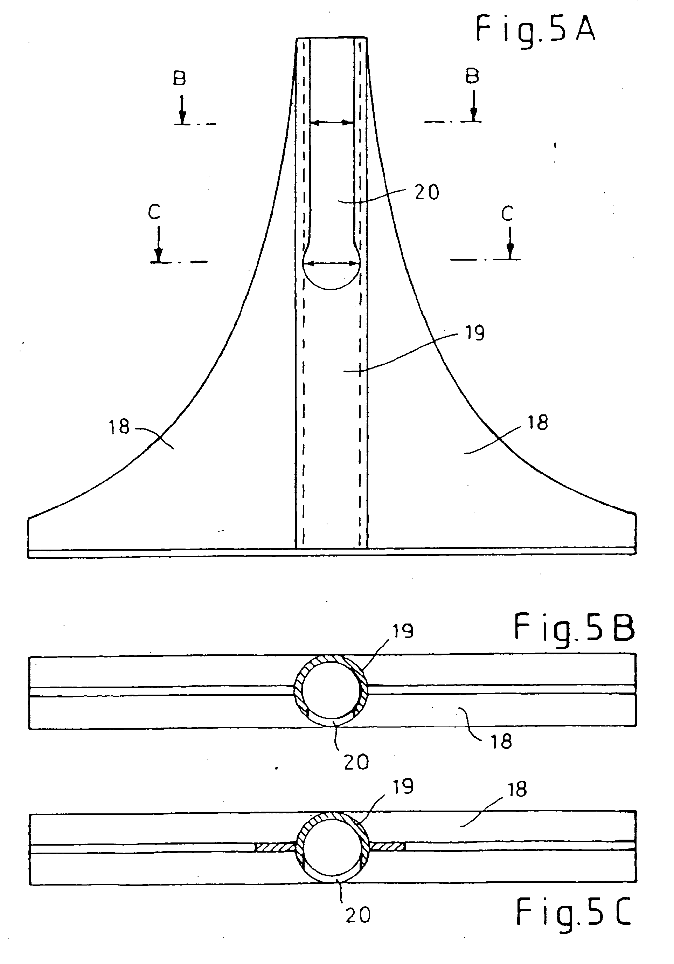

Es versteht sich von selbst, dass die Sichtschutzeinrichtung zusätzlich zur Bodenbefestigung vorgesehen sein kann. Der in den Figuren 2 und 5 dargestellte Flügel 1 der Sichtschutzeinrichtung ist zur Bodenaufstellung mit zwei Klippfüßen 14 versehen. Die Klippfüße 14 sind ebenfalls mit einer Schnappaufnahme versehen, die so ausgebildet ist, dass diese jeweils an einem sich vertikal erstreckenden Rahmenschenkel 10 eines Flügels 1 seitlich befestigbar sind und den in aufgestellter Lage jeweils unteren, sich jeweils horizontal erstreckenden Rahmenschenkel 10 im Bereich einer Ecke stützend untergreifen. Die Klippfüße 14 sind hierzu als einteilige Kunststoffelemente mit einem Sockelbereich 18 und einem einteilig angeformten Standrohr 19 versehen. Das Standrohr 19 hat, die Schnappaufnahme bildend, ein etwa C-förmiges Querschnittsprofil, und zwar nur über eine Teillänge, die auf den jeweils vertikalen Rahmenschenkel 10 eines Rahmens 3 aufgeschnappt wird. Der sich in Längsrichtung des Standrohrs 19 erstreckende Aufnahmeschlitz 20 erweitert sich hierzu in Richtung auf den Sockelbereich 18 des Fußklipps 14. In diesem Bereich bildet der Aufnahmeschlitz 20 eine Art Sackloch, in dem die untere Rahmenecke oder der untere Rahmenschenkel 10 des Rahmens 3 aufliegt.

Zur Wandmontage der Sichtschutzeinrichtung sind Wandklipps 7b vorgesehen, die ebenfalls eine Schnappaufnahme 8 ausbilden und den betreffenden Rahmenschenkel des an der Wand 13 zu montierenden Flügels 1 umgreifen. Die Ausbildung der Wandklipps 7b ist etwa entsprechend der Ausbildung der Verbindungsklipps 7. Die Wandklipps 7b sind jeweils mit einem Sockel versehen, der mit einer Schraube durchsetzt gegen die Wand 13 verdübelt wird.

Durch die Klipp-Technik lassen sich auch diverse Zubehör- und Umbauteile der Sichtschutzeinrichtung befestigen, wie es beispielsweise in Figur 12 dargestellt ist. Dort ist mittels zweier Verbindungsklipps 7 ein Sonnenschirm 15 an einem Rahmenschenkel 10 eines Flügels 1 befestigt. Mit 16 ist in Figur 6 ein Erdspieß mit Schnappaufnahme bezeichnet, der eine Aufstellung der Sichtschutzeinrichtung auf weichem Untergrund ermöglicht.

Insgesamt wird durch die Schnappverbindung der Anbauteile und der Flügel 1 untereinander der Aufbau eines leichten und modularen Systems ermöglicht.

### Bezugszeichenliste

- 1: Flügel
- 2: Sichtschutzbespannung
- 3: Rahmen
- 4: Rohrabschnitte
- 5: Schrauben
- 6: Befestigungsmittel
- 7: Verbindungsklipp
- 7b: Wandklipp
- 8: Schnappaufnahmen
- 9: Haltearme
- 10: Rahmenschenkel
- 11: Rastvorsprünge
- 12: Rastvertiefungen
- 13: Wand
- 14: Fußklipp
- 15: Sonnenschirm
- 16: Erdspieß
- 17: Schwenkbegrenzungsanschläge
- 18: Sockelbereich
- 19: Standrohr
- 20: Aufnahmeschlitz

## Patentansprüche

1. Sichtschutzeinrichtung, umfassend wenigstens einen Flügel (1) als mit Sichtschutzbespannung (2) versehener Rahmen (3), wobei an dem Flügel (1) ein Scharnier bildende Klammern in Form von Verbindungsklipps (7) and Wandklipps (7b) vorgesehen sind, **dadurch gekennzeichnet, dass** die Wandklipps (7b) mit einem Sockel zum Befestigen an einer Wand versehen sind und mit einem Rahmenschenkel (10) des Rahmens (3) in wenigstens einer Winkelstellung eine formschlüssige Arretierung bilden, derart, dass der Rahmenschenkel (10) in den wandklipps (7b) drehfest arretiert ist, wobei jeder Wandklipp (7b) etwa C-förmig ausgebildete Aufnahme (8) für den Rahmenschenkel (10) aufweist, die in montierter Lage diesen umschließt, wobei die Aufnahme (8) durch federelastisch ausgebildete Halterarme (9) ausgebildet ist und wobei der Wandklipp (7b) im Bereich der Aufnahme (8) mindesten eine Rastvertiefung (12) aufweist, die mit Rastvorsprüngen (11) des Rahmenschenkels (10) zusammenwirkt.

2. Sichtschutzeinrichtung nach Anspruch 1, **dadurch gekennzeichnet, dass** die Klammern (7, 7b) einstückig aus Kunststoff ausgebildet sind.

## Claims

1. Privacy device comprising at least one leaf (1) in the form of a frame (3) provided with a privacy covering (2), wherein brackets in the form of connecting clips (7) and wall clips (7b) that form a hinge are provided on the leaf (1), **characterised in that** the wall clips (7b) are provided with a base for fastening to a wall and form, with a frame leg (10) of the frame (3) in at least one angular position, a positive locking arrangement, in such a way that the frame leg (10) is locked in a torsion-proof manner in the wall clips (7b), wherein each wall clip (7b) has a receptacle (8) of approximately C-shaped construction for the frame leg (10), which receptacle encloses the latter in the assembled position, wherein the receptacle (8) is formed by retaining arms (9) of springy construction, and wherein the wall clip (7b) has, in the region of the receptacle (8), at least one latching depression (12) which interacts with latching projections (11) on the frame leg (10).

2. Privacy device according to claim 1, **characterised in that** the brackets (7, 7b) are constructed in one piece from plastic.

## Revendications

1. Dispositif de paravent, comprenant au moins un battant (1) comme un cadre (3) pourvu de revêtement de paravent (2), des attaches formant une charnière sous la forme d'agrafes de liaison (7) et d'agrafes de paroi (7b) étant prévues sur le battant (1), **caractérisé en ce que** les agrafes de paroi (7b) sont pourvues d'un socle pour la fixation sur une paroi et forment avec une branche (10) du cadre (3) dans au moins une position angulaire un blocage à complémentarité de formes de telle manière que la branche de cadre (10) soit bloquée en rotation dans les agrafes de paroi (7b), chaque agrafe de paroi (7b) présentant un logement (8) réalisé à peu près en forme de C pour la branche de cadre (10) qui entoure celle-ci dans la position montée, le logement (8) étant réalisé par des bras de support (9) réalisés à élasticité de ressort et l'agrafe de paroi (7b) présentant dans la zone du logement (8) au moins une cavité d'encliquetage (12) qui coopère avec des saillies d'encliquetage (11) de la branche de cadre (10).

2. Dispositif de paravent selon la revendication 1, **caractérisé en ce que** les attaches (7, 7b) sont réalisées d'un seul tenant en matière plastique.
